# EUROPEAN PATENT SPECIFICATION

(11) **EP 4 000 960 B1**
(45) Date of publication and mention of the grant of the patent: **06.11.2024**
(21) Application number: 21207529.5
(22) Date of filing: 10.11.2021
(51) Int. Cl.: B60C 9/14, B60C 9/18, D03D 15/46, D03D 15/67, D03D 1/00, B60C 9/00

(54) **FABRIC LAYER AND TIRE COMPRISING SUCH A FABRIC LAYER**
GEWEBESCHICHT UND REIFEN MIT EINER SOLCHEN GEWEBESCHICHT
COUCHE DE TISSU ET PNEU COMPRENANT UNE TELLE COUCHE DE TISSU

(30) Priority: 20.11.2020 US 202016953448
(43) Date of publication of application: 25.05.2022
(73) Proprietor: The Goodyear Tire & Rubber Company, Akron, OH 44316 (US)
(72) Inventor: CELIK, Ceyhan, Stow, 44224 (US); MAZUMDAR, Arindam, Stow, 442244 (US)
(74) Representative: Kutsch, Bernd

(56) References cited:
- US-A- 3 040 797
- US-A- 3 902 536
- US-A- 5 720 322

## Description

### Field of the Invention

The present invention relates to a fabric layer and to both pneumatic and non-pneumatic tires comprising such a fabric layer. Preferably, the fabric layer is interposed between a tread portion and other structures of the tire.

### Background of the Invention

Fabric belt assemblies and other fabric structures for tires are known. In one conventional assembly, a folded ply may be reinforced with cords of high modulus material and may have an overall width at least equal to that of the tread portion. Each of its lateral sides may be folded back, in a radially outward direction, around two unfolded single cut plies. The reinforcing cords of the folded ply may form an angle between 20 and 60 degrees relative to the with respect to the equatorial plane of the tire with those of the two single cut plies forming equal and opposed angles with respect to the equatorial plane of the tire.

Because of material limitations, conventional tire constructions have tended to be robust (e. g., heavy and many components, etc.). Such constructions may tend to have a high rolling resistance, which lowers fuel economy; and the bulk of the construction may have a tendency to limit handling response, as well as increasing material cost. It has been a continuing goal to identify lightweight and high strength materials, and to find suitable uses for such materials in tires, such that the weight of tires may be reduced while other properties are maintained.

Conventional aramid reinforcement material has shown fatigue resistance. This property made the material suitable for application of a relatively low twist to the cord, which made it possible to maintain durability and elongation characteristics in a lower density material. One conventional belt assembly has shown improved handling properties when reinforcement cords were reduced to 1100 dTex from 1670 dTex. One conventional overlay structure may be reinforced with aramid cords having a twist level between 6 TPI (TPI = "turns per 2.54 cm") and 14 TPI.

One conventional belt structure may be reinforced with 420 to 1100 dTex aramid cords, with a measured toughness of 30 MPa to 50 MPa, an initial modulus 15,000 MPa to 40,000 MPa, a tenacity of 140 cN/Tex to 200 cN/Tex, and a dynamic flex fatigue retained break strength of 50% to 100%. These belts may be reinforced with reinforcement cords extending parallel to one another and making an angle of 10° to 40° with respect to the equatorial plane (EP) of the tire. The belt assembly may comprise a folded belt with folded portions on each lateral side folded radially over a cut belt. The axially outer portions of the folded belt may be folded in a radially outward direction and disposed radially outward of the cut belt.

Another conventional tire may have an overlay structure disposed radially outward from the belt assembly. Helical convolutions of a ribbon may be wound axially across two single cut plies such that the convolutions are in abutting contact with each other. The ribbon may be reinforced with cords of textile material.

U.S. Patent 5,720,322 discloses a wick woven chafer fabric for automotive radial tires, having a monofilament fill yarn and a large denier textured multifilament warp yarn. It is described therein that the filling yarns if multifilament, and particularly textured, tend to flatten out so that the filling yarn shall be monofilament to avoid flattening of the filling yarn.

U.S. Patent 3,040,797 discloses a tire with finishing strips having fabrics which comprise interwoven warp and weft elements. In embodiments, the weft elements shall be impermeable to the passage of air and are preferably single or monofilaments. The warp elements may comprise a plurality of filaments.

### Summary of the Invention

The invention relates to a fabric layer in accordance with claim 1 and to a tire in accordance with claim 12.

Dependent claims refer to preferred embodiments of the invention.

According to a preferred aspect of the invention, the fabric layer further includes flat textured weft stitches for mitigating possible cracks.

According to a preferred aspect of the invention, each of the warp cords is a flat monofilament.

According to a preferred aspect of the invention, each of the warp cords is a relatively thin monofilament.

According to a preferred aspect of the invention, each of the warp cords is an oblong monofilament.

According to a preferred aspect of the invention, each of the warp cords is a cylindrical monofilament.

According to a preferred aspect of the invention, each of the weft cords absorbs an adhesive dip.

According to a preferred aspect of the invention, a lateral stiffness of the fabric layer prevents relative movement between each of the warp cords.

According to a preferred aspect of the invention, a lateral stiffness of the fabric layer prevents the warps cords from being moved by an external penetrating sharp object.

According to a preferred aspect of the invention, the fabric layer maintains the warp cords at a constant lateral spacing.

According to a preferred aspect of the invention, each flat weft cord has a ratio of the thickness of the weft cord as measured in a direction perpendicular to the fabric layer to the width of the weft cord as measured in a direction perpendicular to the length of the weft cord in a range of less than 0.33 or less than 0.25.

According to a preferred aspect of the invention, the flat warp cord has a ratio of the thickness of the warp cord as measured in a direction perpendicular to the fabric layer to the width of the warp cord as measured in a direction perpendicular to the length of the warp cord in a range of less than 0.33, preferably less than 0.2 or less than 0.10.

According to a preferred aspect of the invention, the flat weft stitches have a ratio of the thickness of the weft stiches as measured in a direction perpendicular to the fabric layer to the width of the weft stitches as measured in a direction perpendicular to the length of the weft stitches in a range of less than 0.33, preferably less than 0.2 or less than 0.10.

### Definitions

As used herein and in the claims:
"Annular" means formed like a ring.
"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p- phenyleneterephthalamide).
"Aspect ratio" means the ratio of a tire section height to its section width. For example, the aspect ratio may be the maximum axial distance between the exterior of the tire sidewalls when unloaded and inflated at normal pressure, multiplied by 100% for expression as a percentage. Low aspect ratio may mean a tire having an aspect ratio of 65 and below.
"Asymmetric tread" means a tread that has a tread pattern not symmetrical about the centerplane or equatorial plane (EP) of the tire.
"Axial" and "axially" refer to lines or directions that are parallel to the axis of rotation of the tire.
"Belt structure" means one or at least two annular layers or plies of parallel cords, woven or unwoven, underlying the tread, unanchored to the bead, and having cords inclined respect to the equatorial plane (EP) of the tire. The belt structure may also include plies of parallel cords inclined at relatively low angles, acting as restricting layers.
"Cable" means a cord formed by twisting together two or more plied yarns.
"Circumferential" and "circumferentially" mean lines or directions extending along the perimeter of the surface of the annular tire parallel to the equatorial plane (EP) and perpendicular to the axial direction.
"Cord" means one of the reinforcement strands which the reinforcement structures of the tire comprise.
"Cord angle" means the acute angle, left or right in a plan view of the tire, formed by a cord with respect to the equatorial plane (EP). The "cord angle" is measured in a cured but uninflated tire.
"Cord twist" means each yarn of the cord has its component filaments twisted together a given number of turns per unit of length of the yarn (usually expressed in turns per 2.54 cm (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.
"Denier" means the weight in grams per 9000 meters (unit for expressing linear density).
"Dtex" means the weight in grams per 10,000 meters.
"Equatorial plane (EP)" means the plane perpendicular to the tire's axis of rotation and passing through the center of its tread; or the plane containing the circumferential centerline of the tread.
"Fabric" means a network of preferably unidirectionally extending cords, which may be twisted, and which in turn are composed of a plurality of a multiplicity of filaments (which may also be twisted).
"Fiber" is a unit of matter, either natural or man-made, that forms the basic element of filaments and has a length at least 100 times its diameter or width.
"Filament count" means the number of filaments that make up a yarn. Example: 1000 denier polyester has approximately 190 filaments.
"Gauge" refers generally to a measurement, and specifically to a thickness measurement.
"Inner" means toward the inside of the tire and "outer" means toward its exterior.
"Lateral" means an axial direction.
"Lay length" means the distance at which a twisted filament or strand travels to make a 360° rotation about another filament or strand.
"Monofilament" means a single, generally large filament of synthetic fiber
"Normal load" means the specific design inflation pressure and load assigned by the appropriate standards organization for the service condition for the tire.
"Radial" and "radially" mean directions radially toward or away from the axis of rotation of the tire.
"Tenacity" means stress expressed as force per unit linear density of the unstrained specimen (cN/tex).
"Tension" for a cord means force on the cord expressed as mN/tex.
"Warp" means, in weaving/forming of fabric, lengthwise or longitudinal warp yarns, filaments, threads, cables, fibers, and/or cords that may be held stationary in tension on a frame or loom while transverse "weft" yarns, filaments, threads, cables, fibers, and/or cords may be drawn through, and inserted over-and-under, the warp yarns, filaments, threads, fibers, and/or cords.
"Weft" means, in weaving/forming of fabric, transverse yarns, filaments, threads, cables, fibers, and/or cords that may be drawn through, and inserted over-and-under, "warp" yarns, filaments, threads, cables, fibers, and/or cords.
A single weft yarn, filament, thread, cable, fiber, and/or cord of a weft crossing the "warp" yarns, filaments, threads, cables, and/or cords may be termed a "pick".
"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Brief Description of the Drawings

The invention will be described by way of example and with reference to the accompanying drawings in which:
FIG. 1 is a schematic cross-sectional view of an example tire for use with the present invention;
FIG. 2 is a schematic cross-sectional view of another example tire for use with the present invention;
FIG. 3 is a schematic perspective view of an example fabric element in accordance with the present invention;
FIG. 4 is a schematic perspective view of the fabric element of FIG. 3 with a schematic microscopic representation of part of the element; and
FIG. 5 is a schematic perspective view of a conventional fabric element.

### Detailed Description of Preferred Embodiments of the Invention

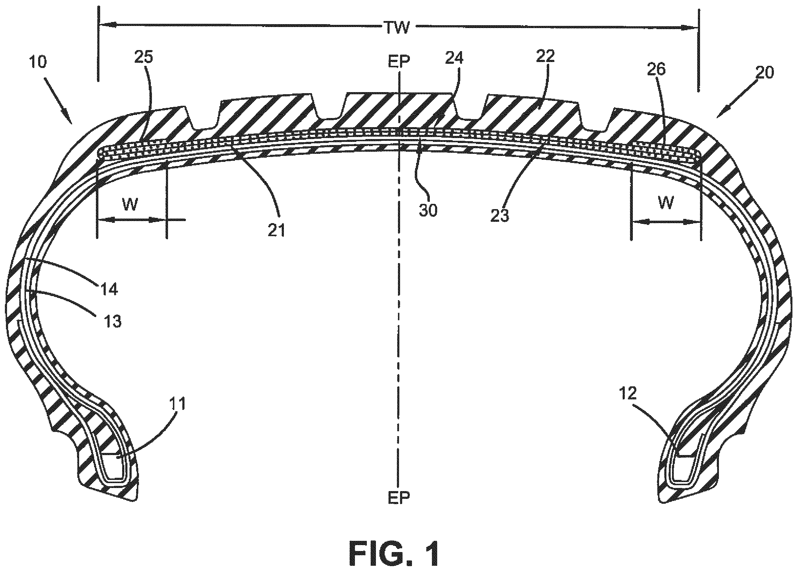

With reference to FIG. 1, there is represented a tire 10, pneumatic or non-pneumatic, for use with the present invention. The tire 10 preferably has a pair of substantially inextensible bead cores 11, 12 axially spaced apart with one or two carcass plies 13, 14 (or more) extending between the bead cores 11, 12. The carcass plies 13, 14 may be folded axially and radially outward about each of the bead cores 11, 12 and be reinforced by cords substantially parallel to each other in the same ply at an angle of 50° to 90° with respect to the equatorial plane (EP) of the tire 10. Cords belonging to adjacent carcass plies 13, 14 preferably have opposite angles crossing each other. The cords of the carcass plies 13, 14 may be any suitable material, such as steel, nylon, rayon, aramid, and/or polyester. The tire 10 may have carcass plies 13,14 of side-by-side polyester or rayon cables and a crown area 20 reinforced by a belt assembly 21 located radially inward of the tire tread 22. The tire 10 preferably has an aspect ratio between 25 and 65.

The tire 10 may include a belt structure 30 with an essentially rigid folded belt 23 and a cut belt 24 disposed radially outward of the folded belt. Both belts 23, 24 may be reinforced with, for example, aramid cables or yarns. The belts 23, 24 may have identical or different constructions. Such cords may be treated (coated) with one or more layers of adhesive in a process known as dipping. The modulus of a treated cord may be a function of the twist of the different yarns used in the cord, the cord twist, and the manner that the cord is subjected to the dipping operation.

Cords of the folded belt 23 are preferably substantially parallel to each other and make an angle of 15° to 40° with respect to the equatorial plane (EP) of the tire 10. The axially outer portions of the folded belt 23 may be folded back on both lateral sides in a radially outward direction over axial edges of the cut belt 24 with the folded portions 25, 26 being symmetrical with respect to the equatorial plane (EP). The folded portions 25, 26 may each have a transverse width between 5% and 30%, or 15% and 30% of the tread width (TW).

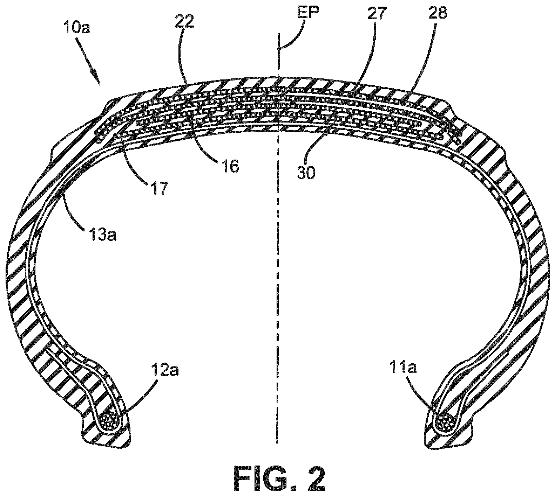

As shown in FIG. 2, another example tire 10a, for use with the present invention, includes one carcass ply 13a wrapped around beads 11a, 12a. The belt structure 30 preferably includes belts 16, 17 reinforced with aramid cords and overlays 27, 28 disposed radially outward of the belts 16, 17. The belts 16, 17 may have identical or different constructions. The overlays 27, 28 may be single sheets of overlay material, a cut overlay (e.g., reinforcement cords in the overlay discontinuous at random locations throughout the tire), and/or a spiral overlay. The reinforcing cords in the overlay 27, 28 may comprise nylon, polyester, polyamine, aramid, and/or any other suitable overlay reinforcement material.

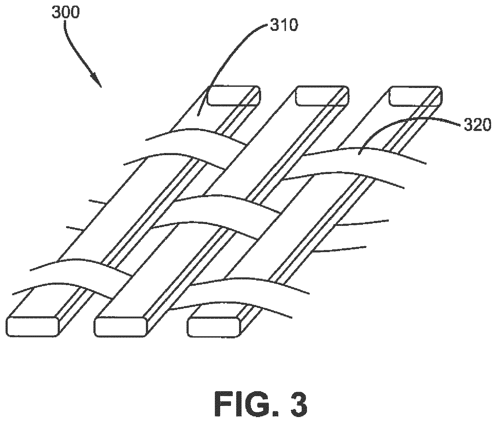

As shown in FIG. 3, in accordance with the present invention, structures of the belts 16, 17, 23, 24, 30, overlays 27, 28, carcass 13, 14, reinforcement for the crown area 20, chippers, flippers, toe guards, protective layers, and/or any other suitable plies/layers of the tire 10 may include a woven fabric layer 300 (which may also be called woven fabric structure 300) with warp cords 310 and weft cords 320.

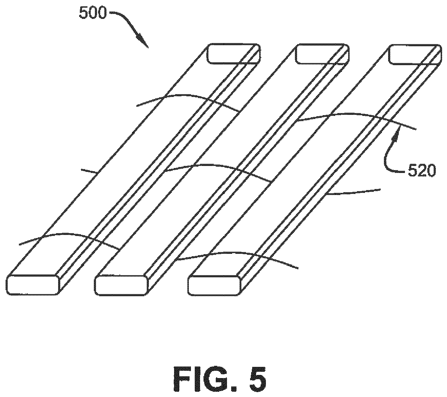

Conventionally, weft yarns, filaments, threads, cables, fibers, and/or cords (hereinafter generally "cords") 520 of a fabric 500 may only function to provide integrity to the fabric for handling before installation in, for example a tire 10 (FIG. 5).

The warp cords 310 are preferably each relatively smooth, flat or thin or oblong or cylindrical, monofilament.

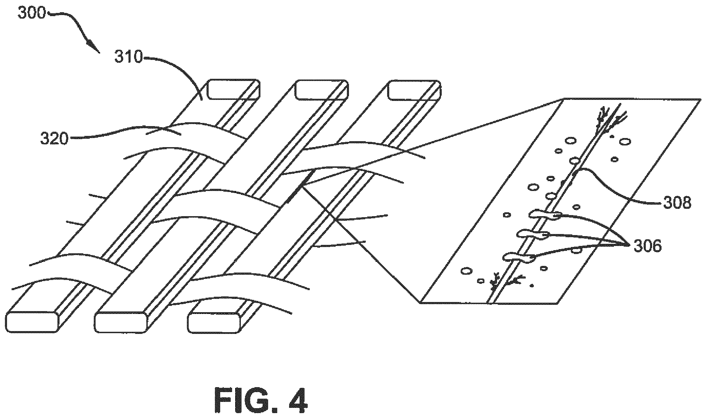

As shown in FIG. 4, when adhered to rubber, separations at a rubber-monofilament interface may propagate along the length of a monofilament due to the smooth surface and, in a tire 10, may cause "tread throws" if the monofilament is used as a protective layer or other failure of structural integrity.

According to a preferred embodiment of the present invention, the weft cords 320 include flat textured multifilament cords as each weft cord 320 extends transverse to the monofilament warp cords 310. Such a construction may help to prevent or stop crack propagation along the length of the warp cords 320, function as a stitch for securing both sides of a possible crack, increase fabric surface area to increase adhesion between rubber and the fabric 300. The increased wider surface area of the flat textured multifilament wefts cords 320 may retain more adhesive dip and increase adhesion strength via increased adhesion interfacial area. Further, dip may increasingly penetrate the textured multifilament weft cords 320 thereby enhancing the structural integrity and adhesive bond of the overall fabric 300. Consequently, flat textured weft/pick cords 320 may not increase fabric gauge/thickness significantly.

Additionally, flat textured weft stitches 306 around possible cracks 308, which may propagate along the length of flat monofilament warp cords 310, may further support structural integrity of the fabric 300 (FIG. 4). The flat textured weft cords 320 may increase lateral stiffness of the fabric 300 and/or a fabric/rubber treatment and/or a composite of both. As discussed above, textured weft cords 320 may have a larger surface area and thus absorb more dip than smaller gauge twisted weft cords. This large surface area, along with more dip, may create a stiff weft cord 320 that may further secure adjacent flat monofilament warp cords 310.

With regard to use in protective layers of the tire 10, increased lateral stiffness of the fabric 300 may prevent the flat monofilament warp cords 310 from being pushed in/out during penetration of a sharp object. A laterally stiffer protective fabric 300 may maintain warp cord spacing and mitigate increase of that spacing by a penetrating sharp object thereby increasing the effectiveness of such a protective layer.

## Claims

1. A fabric layer for a tire, the fabric layer (300) comprising a plurality of warp cords (310), each warp cord (310) being a monofilament, and a plurality of weft cords (320) extending transversely over and under the warp cords (310), each weft cord (320) being a flat multifilament cord, wherein
the flat weft cord (320) has a ratio of the thickness of the weft cord (320) as measured in a direction perpendicular to the fabric layer (300) to the width of the weft cord (320) as measured in a direction perpendicular to the length of the weft cord in a range of less than 0.5.

2. The fabric layer of claim 1 further including weft stitches (306), preferably flat weft stitches or flat textured weft stitches.

3. The fabric layer of claim 1 or 2 wherein each of the warp cords (310) is, in cross-section, a cylindrical monofilament.

4. The fabric layer of claim 1 or 2 wherein each of the warp cords (310) is a flat warp cord.

5. The fabric layer of at least one of the previous claims wherein each of the warp cords (310) is a monofilament or a flat monofilament.

6. The fabric layer of at least one of the previous claims further including an adhesive dip.

7. The fabric layer of claim 6 wherein each of the weft cords (320) has absorbed the adhesive dip.

8. The fabric layer of at least one of the previous claims wherein each weft cord (320) is a flat textured multifilament cord.

9. The fabric layer of at least one of the previous claims wherein the flat weft cord (320) has a ratio of the thickness of the weft cord (320) as measured in a direction perpendicular to the fabric layer (300) to the width of the weft cord (320) as measured in a direction perpendicular to the length of the weft cord in a range of less than 0.33 or less than 0.25.

10. The fabric layer of claim 4 wherein the flat warp cord (310) has a ratio of the thickness of the warp cord (310) as measured in a direction perpendicular to the fabric layer (300) to the width of the warp cord (310) as measured in a direction perpendicular to the length of the warp cord in a range of less than 0.33, preferably less than 0.2 or less than 0.10.

11. The fabric layer of claim 2 wherein the flat weft stitches have a ratio of the thickness of the weft stiches as measured in a direction perpendicular to the fabric layer (300) to the width of the weft stitches as measured in a direction perpendicular to the length of the weft stitches in a range of less than 0.33, preferably less than 0.2 or less than 0.10.

12. A tire having a component, the component comprising the fabric layer (300) in accordance with at least one of the previous claims.

13. The tire of claim 12 wherein the tire is a pneumatic tire and wherein the component is a belt structure (30), a carcass layer (13, 14), a chipper layer or an overlay (27, 28).

14. The tire of claim 12 or 13 comprising a carcass ply, a tread disposed radially outward of a crown region of the carcass ply, a belt structure preferably having an overall axial width equal or substantially equal to a tread width interposed between the tread and the crown region in circumferential surrounding relation to the carcass ply.

## Patentansprüche

1. Gewebeschicht für einen Reifen, wobei die Gewebeschicht (300) Folgendes umfasst: eine Vielzahl von Korden in Form von Kettfäden (310), wobei jeder Kord in Form von Kettfaden (310) ein Monofilament ist, und eine Vielzahl von Korden in Form von Schussfäden (320), die sich quer über und unter den Korden in Form von Kettfäden (310) erstrecken, wobei jeder Kord in Form von Schussfaden (320) ein flacher Multifilamentkord ist, wobei
der flache Kord in Form von Schussfaden (320) ein Verhältnis der Dicke des Kordes in Form von Schussfaden (320), gemessen in einer Richtung senkrecht zur Gewebeschicht (300), zur Breite des Kordes in Form von Schussfaden (320), gemessen in einer Richtung senkrecht zur Länge des Kordes in Form von Schussfaden, in einem Bereich von weniger als 0,5 aufweist.

2. Gewebeschicht nach Anspruch 1, die ferner Schussstiche (306), vorzugsweise flache Schussstiche oder flache texturierte Schussstiche enthält.

3. Gewebeschicht nach Anspruch 1 oder 2, wobei jeder der Korde in Form von Kettfäden (310) im Querschnitt ein zylindrisches Monofilament ist.

4. Gewebeschicht nach Anspruch 1 oder 2, wobei jeder der Korde in Form von Kettfäden (310) ein flacher Kord in Form von Kettfaden ist.

5. Gewebeschicht nach mindestens einem der vorhergehenden Ansprüche, wobei jeder der Korde in Form von Kettfäden (310) ein Monofilament oder ein flaches Monofilament ist.

6. Gewebeschicht nach mindestens einem der vorhergehenden Ansprüche, die außerdem eine adhäsive Beschichtung enthält.

7. Gewebeschicht nach Anspruch 6, wobei jeder der Korde in Form von Schussfäden (320) die adhäsive Beschichtung absorbiert hat.

8. Gewebeschicht nach mindestens einem der vorhergehenden Ansprüche, wobei jeder Kord in Form von Schussfaden (320) ein flacher strukturierter Kord in Form von Schussfaden ist.

9. Gewebeschicht nach mindestens einem der vorhergehenden Ansprüche, wobei der flache Kord in Form von Schussfaden (320) ein Verhältnis der Dicke des Kordes in Form von Schussfaden (320), gemessen in einer Richtung senkrecht zur Gewebeschicht (300), zur Breite des Kordes in Form von Schussfaden (320), gemessen in einer Richtung senkrecht zur Länge des Kordes in Form von Schussfaden, in einem Bereich von weniger als 0,33 oder weniger als 0,25 aufweist.

10. Gewebeschicht nach Anspruch 4, wobei der flache Kord in Form von Kettfaden (310) ein Verhältnis der Dicke des Kordes in Form von Kettfaden (310), gemessen in einer Richtung senkrecht zur Gewebeschicht (300), zur Breite des Kordes in Form von Kettfaden (310), gemessen in einer Richtung senkrecht zur Länge des Kordes in Form von Kettfaden, in einem Bereich von weniger als 0,33, vorzugsweise weniger als 0,2 oder weniger als 0,10 aufweist.

11. Gewebeschicht nach Anspruch 2, wobei die flachen Schussstiche ein Verhältnis der Dicke der Schussstiche, gemessen in einer Richtung senkrecht zur Gewebeschicht (300), zur Breite der Schussstiche, gemessen in einer Richtung senkrecht zur Länge der Schussstiche, in einem Bereich von weniger als 0,33, vorzugsweise weniger als 0,2 oder weniger als 0,10 aufweisen.

12. Reifen, der eine Komponente umfasst, wobei die Komponente die Gewebeschicht (300) nach mindestens einem der vorhergehenden Ansprüche umfasst.

13. Reifen nach Anspruch 12, wobei der Reifen ein Luftreifen ist und wobei die Komponente eine Gürtelstruktur (30), eine Karkassenschicht (13, 14), eine Schicht in Form von Wulstverstärker oder eine Schutzlage (27, 28) ist.

14. Reifen nach Anspruch 12 oder 13, der Folgendes umfasst: eine Karkassenlage, eine radial außerhalb eines Zenitbereichs der Karkassenlage angeordnete Lauffläche, einen Gürtelaufbau, der vorzugsweise eine axiale Gesamtbreite aufweist, die gleich oder im Wesentlichen gleich einer Laufflächenbreite ist, die zwischen der Lauffläche und dem Zenitbereich in einer die Karkassenlage in Umfangsrichtung umgebenden Beziehung angeordnet ist.

## Revendications

1. Couche de tissu pour un bandage pneumatique, la couche de tissu (300) comprenant un certain nombre de câblés (310) sous la forme de fils de chaîne, chaque câblé (310) sous la forme d'un fil de chaîne représentant un monofilament, et un certain nombre de câblés (320) sous la forme de fils de trame qui s'étendent dans la direction transversale par dessus et en dessous des câblés (310) sous la forme de fils de chaîne, chaque câblé (320) sous la forme d'un fil de trame représentant un câblé de forme plate du type à multifilaments, dans laquelle
le câblé (320) sous la forme d'un fil de trame possède un rapport de l'épaisseur du câblé (320) sous la forme d'un fil de trame, telle qu'on la mesure dans une direction perpendiculaire à la couche de tissu (300), à la largeur du câblé (320) sous la forme d'un fil de trame, telle qu'on la mesure dans une direction perpendiculaire à la longueur du câblé sous la forme d'un fil de trame, qui se situe dans une plage qui est inférieure à 0,5.

2. Couche de tissu selon la revendication 1, qui englobe en outre des mailles de trame (306), de préférence des mailles de trame de forme plate ou des mailles de trame de forme plate texturées.

3. Couche de tissu selon la revendication 1 ou 2, dans laquelle chacun des câblés (310) sous la forme de fils de chaîne représente, en section transversale, un monofilament de forme cylindrique.

4. Couche de tissu selon la revendication 1 ou 2, dans laquelle chacun des câblés (310) sous la forme de fils de chaîne représente un câblé sous la forme d'un fil de chaîne de forme plate.

5. Couche de tissu selon au moins une des revendications précédentes, dans laquelle chacun des câblés (310) sous la forme de fils de chaîne représente un monofilament ou un monofilament de forme plate.

6. Couche de tissu selon au moins une des revendications précédentes, qui englobe en outre un revêtement adhésif appliqué par imprégnation.

7. Couche de tissu selon la revendication 6, dans laquelle chacun des câblés (320) sous la forme de fils de trame a absorbé le revêtement adhésif appliqué par imprégnation.

8. Couche de tissu selon au moins une des revendications précédentes, dans laquelle chacun des câblés (320) sous la forme de fils de trame représente un câblé texturé de forme plate du type à multifilaments.

9. Couche de tissu selon au moins une des revendications précédentes, dans laquelle le câblé (320) de forme plate sous la forme d'un fil de trame possède un rapport de l'épaisseur du câblé (320) sous la forme d'un fil de trame, telle qu'on la mesure dans une direction perpendiculaire à la couche de tissu (300) à la largeur du câblé (320) sous la forme d'un fil de trame, telle qu'on la mesure dans une direction perpendiculaire à la longueur du câblé sous la forme d'un fil de trame, qui se situe dans une plage qui est inférieure à 0,33 ou inférieure à 0,25.

10. Couche de tissu selon la revendication 4, dans laquelle le câblé (310) de forme plate sous la forme d'un fil de chaîne possède un rapport de l'épaisseur du câblé (310) sous la forme d'un fil de chaîne, telle qu'on la mesure dans une direction perpendiculaire à la couche de tissu (300) à la largeur du câblé (310) sous la forme d'un fil de chaîne, telle qu'on la mesure dans une direction perpendiculaire à la longueur du câblé sous la forme d'un fil de trame, qui se situe dans une plage qui est inférieure à 0,33, de préférence inférieure à 0,2 ou ou inférieure à 0,10.

11. Couche de tissu selon la revendication 4, dans laquelle les mailles de trame de forme plate possèdent un rapport de l'épaisseur des mailles de trame, telle qu'on la mesure dans une direction perpendiculaire à la couche de tissu (300) à la largeur des mailles de trame, telle qu'on la mesure dans une direction perpendiculaire à la longueur des mailles de trame, qui se situe dans une plage qui est inférieure à 0,33, de préférence inférieure à 0,2 ou inférieure à 0,10.

12. Bandage pneumatique possédant un composant, le composant comprenant la couche de tissu (300) en conformité avec au moins une des revendications précédentes.

13. Bandage pneumatique selon la revendication 12, dans lequel le bandage pneumatique représente un bandage pneumatique proprement dit, et dans lequel le composant est une structure de ceintures (30), une couche carcasse (13, 14), une couche faisant office de renfort d'appui ou une nappe de protection (27, 28).

14. Bandage pneumatique selon la revendication 12 ou 13, qui comprend une nappe de carcasse, une bande de roulement disposée, dans la direction radiale, à l'extérieur d'une zone faisant office de sommet de la nappe de carcasse, une structure de ceintures qui possède de préférence une largeur axiale globale qui est égale ou qui est essentiellement égale à une largeur de la bande de roulement, intercalée entre la bande de roulement et la zone faisant office de sommet dans une relation d'enveloppement circonférentiel par rapport à la nappe de carcasse.
